# FASCICULE DE BREVET EUROPEEN

(11) **EP 0 821 884 B1**
(45) Date de publication et mention de la délivrance du brevet: **27.10.2004**
(21) Numéro de dépôt: 96870100.3
(22) Date de dépôt: 02.08.1996
(51) Int. Cl.: A23L 1/182, A23L 1/10, A23L 3/3508, A23L 3/358, A23B 9/30, A23B 9/26

(54) **Procédé de préparation de graines ramollies à usage alimentaire et conditionnement de graines ramollies prêtes à l'emploi**
Verfahren zur Herstellung von erweichten Samenkörnern für Lebensmittel und Verpackung der gebrauchsfertigen Körner
Method for producing softened grain for food and packing of the ready-to-use grain

(43) Date de publication de la demande: 04.02.1998
(73) Titulaire: PURATOS N.V., 1702 Groot-Bijgaarden (BE)
(72) Inventeur: Ameye, Serge Hector, B - 1750 Lennik (BE); Tossut, Pierre Patrick Aldo, B - 4620 Fleron (BE); Janke, Hans Christian, D - 57368 Lennestadt (DE)
(74) Mandataire: Van Malderen, Joelle

(56) Documents cités:
- EP-A- 0 191 573
- EP-A- 0 415 787
- GB-A- 807 084
- US-A- 5 026 570
- PATENT ABSTRACTS OF JAPAN vol. 017, no. 589 (C-1124), 27 Octobre 1993 & JP-A-05 176693 (SB SHOKUHIN KK), 20 Juillet 1993,
- DATABASE WPI Section Ch, Week 9503 Derwent Publications Ltd., London, GB; Class D13, AN 95-018216 XP002023037 & JP-A-06 303 909 (KAMEDA SEIKA CO LTD) , 1 Novembre 1994

## Description

La présente invention concerne un procédé de préparation de produits de boulangerie, comprenant la pré-cuisson de graines entières ou broyées afin d'une part de les rendre conservables et d'autre part de pouvoir les utiliser sans opérations de traitement de trempage préalables en boulangerie.

La présente invention concerne également un conditionnement, de préférence sous vide, de telles graines permettant une conservation prolongée à la température ambiante, ainsi que l'utilisation immédiate sans nécessité de trempage préalable.

### Arrière-plan technologique

Dans de nombreux pays et en particulier en Allemagne, des graines ramollies de céréales, de Fabacées, de Cucurbitacées ou d'oléagineux sont utilisées dans divers types de pains (pains de froment complets ou pains blancs, pains de seigle, pain de tournesol, pain au lin, ...). Les graines peuvent être utilisées entières ou concassées.

Le ramollissement des graines est obtenu par trempage des graines dans l'eau ou par traitement thermique (injection de vapeur, cuisson).

En général, le boulanger utilise le procédé de trempage dans l'eau. En fonction de la température de l'eau, on distingue deux types de trempage :
- Brühstück : on trempe les graines dans l'eau chaude (70-100 °C). Le récipient contenant l'eau et les graines est stocké soit 6 heures à 20 °C, soit 4 heures à 40 °C.
- Quellstück : on trempe les graines dans l'eau froide (10-30 °C). Le mélange des graines et de l'eau est stocké soit 12 heures à 20 °C, soit 8 heures à 40 °C.

La proportion d'eau et de graines est en général de 1 à 1. A la fin du trempage, la totalité de l'eau est absorbée par les graines.

Au cours du trempage, des fermentations indésirables peuvent cependant se développer en raison de contaminations microbiennes. Ces fermentations ont un effet néfaste sur le goût et ne sont pas acceptables pour des raisons de santé publique. Il convient d'éviter ces contaminations et, en particulier, le développement de Bacillus mesentericus, agent du filant des pâtes, dont les spores résistent à la cuisson au four.

Le trempage constitue donc une étape critique pour la qualité microbiologique du produit fini. Des précautions d'hygiène doivent en conséquence être prises par l'utilisateur.

La préparation classique de Brühstück et Quellstück exige de toute manière un temps de travail important, en particulier pour le pré-trempage.

La demande de brevet EP 0415787 mentionne la préparation de graines de riz pouvant servir d'ingrédient pour des compositions alimentaires et dans lesquelles le riz est trempé dans l'eau acidifée à un pH inférieur ou égal à 4,5 puis cuit jusqu'à un degré de tendreté déterminé. Le riz cuit est ensuite conditionné humide, ce procédé permettant d'obtenir une grande variété de dégrés de cuisson, y compris les produits précuits.

La demande de brevet EP 0191573 décrit la cuisson de riz dans une solution d'acide et de sel, le riz acide étant connu pour avoir un effet de déstabilisation sur les cellules bactériennes.

Le document JP 95-018 216 décrit la préparation d'un gâteau de riz dans laquelle les grains de riz sont trempés dans de l'eau acidifiée, égouttés et rincés avant d'être cuits à la vapeur et broyés.

### Buts visés par l'invention

Le procédé de la présente invention vise à remédier aux inconvénients précités en mettant à la disposition de l'utilisateur des graines ramollies prêtes à l'emploi, de qualité microbiologique assurée, et ceci sous forme d'un conditionnement assurant leur conservation.

### Eléments caractéristiques de l'invention

Le procédé de la présente invention comporte les étapes suivantes :
- mélange des graines à tremper avec de l'eau, de préférence à raison d'un volume de graines par volume d'eau;
- acidification du mélange de graines et d'eau à un pH inférieur à 4,5 et de préférence inférieur à 4,2; et
- cuisson du mélange de graines et d'eau ainsi acidifié.

De préférence, on ajoute au mélange de graines et d'eau, du sel à raison de 2% environ calculé sur le poids des graines.

L'acidification peut être réalisée par ajout soit d'acide lactique, soit d'acide acétique, soit d'acide citrique, soit d'autres acides, qu'ils soient organiques ou minéraux.

L'acidification peut aussi être obtenue en ajoutant au mélange graines/eau/sel, une quantité de levain de panification pour réaliser le pH souhaité. Un levain est un mélange de farine (seigle, froment ou autres), d'eau et éventuellement d'autres ingrédients (sucres, sel, ...) fermenté par les bactéries lactiques. Cette fermentation lactique peut être spontanée ou induite soit par un levain chef, soit par une préparation de départ (starter) de ferments lactiques lyophilisée. Les bactéries lactiques produisent de l'acide lactique et acétique à partir des sucres de la farine et des sucres ajoutés. Le levain est donc acide et peut être utilisé pour diminuer le pH du mélange précité de graines, d'eau et de sel.

Dans ce cas, d'une part le levain sert d'agent acidifiant, et d'autre part, il enrichit l'arôme du pain.

Il est possible de réaliser cette cuisson soit directement dans le récipient de conditionnement pour autant qu'il résiste à la cuisson, soit séparément, par exemple dans une cuve de cuisson avec transfert du produit cuit, dans des conditionnements appropriés sous des conditions aseptiques. De préférence, dans un cas comme dans l'autre, le conditionnement est un conditionnement sous vide.

Dans la pratique, le mélange acidifié de graines, d'eau et de sel est cependant de préférence directement emballé sous vide dans des emballages (sachets, boîtes de conserve, ...) résistant à la cuisson.

Les emballages contenant le mélange acidifié de graines/eau/sel sont ensuite placés dans un cuiseur de type autoclave de façon à cuire le produit avec une température entre 95 °C et 120 °C, durant 10 à 60 minutes. Cette cuisson ramollit les graines par gélatinisation de l'amidon et détruit les micro-organismes contenus dans le produit (stérilisation). La cuisson contribue donc à la conservation du produit et les fermentations indésirables sont inhibées par le traitement thermique et par l'addition d'acide. Le sel peut également contribuer à la stabilisation du produit.

La cuisson est arrêtée dès que la tendreté des graines est suffisante. Les critères de tendreté sont les suivants :
- la graine doit ramollir
- il subsiste une légère résistance à la mastication ("al dente")
- la mie d'un pain contenant ces graines est facilement tranchable
- les graines ne doivent pas se désagréger après la cuisson d'un pain contenant ces graines.

La combinaison température - temps de cuisson est liée au type de graines à traiter et sera déterminée facilement par l'homme de métier.

La préparation finale de graines ramollies traitées selon l'invention se conserve au minimum 6 mois, à température ambiante.

A titre d'illustration, différentes applications de l'invention seront décrites dans les exemples suivants.

### Exemple 1

### Composition du mélange

| **Ingrédients** | **Quantités (g)** |
|---|---|
| **Graines de seigle entières** | 368.03 |
| **Eau** | 551.12 |
| **Sel** | 7.33 |
| **Levain de seigle liquide** ***** | 73.52 |
| **Total** | **1000** |

| | |
|---|---|
| * : acidité titrable du levain : 105 ml 0.1 N NaOH/10 g | |

- Placer le mélange obtenu dans un sachet ou un récipient résistant à la cuisson.
- Sceller le mélange sous vide dans l'emballage.
- Cuire le mélange en autoclave, à 120 °C durant 20 minutes.

### Exemple 2

### Composition du mélange

| **Ingrédients** | **Quantités (g)** |
|---|---|
| **Graines de blé entières** | 368.03 |
| **Eau** | 551.12 |
| **Sel** | 7.33 |
| **Levain de seigle liquide** ***** | 73.52 |
| **Total** | **1000** |

| | |
|---|---|
| * : acidité titrable du levain : 105 ml 0.1 N NaOH/10 g | |

- Placer le mélange obtenu dans un sachet ou un récipient résistant à la cuisson.
- Sceller le mélange sous vide dans l'emballage.
- Cuire le mélange en autoclave, à 120 °C durant 20 minutes.

### Exemple 3

### Composition du mélange

- Mélanger 500 ml de graines de seigle entières avec 500 ml d'eau. Acidifier à pH 4,0 en ajoutant une solution d'acide lactique 88%.
- Placer le mélange obtenu dans un sachet ou un récipient résistant à la cuisson.
- Sceller le mélange sous vide dans l'emballage.
- Cuire le mélange en autoclave, à 120 °C durant 20 minutes.

### Recette de pain de seigle avec Brühstück

| **Ingrédients** | **Quantités (kg)** |
|---|---|
| **Farine de seigle (type 1150)** | 0.700 |
| **Farine de froment (type 550)** | 0.300 |
| **Brühstück (graines de seigle) cf. exemple 1** | 0.300 |
| **Purasauer** ***** | 0.035 |
| **Sel** | 0.024 |
| **Levure** | 0.012 |
| **Eau** | 0.975 ** |

| | |
|---|---|
| * produit acidifiant destiné à la réalisation en direct du pain de seigle; Purasauer est disponible sur la marché. | |
| ** 75% du poids de farine et des grains | |

- pétrissage : 5' (vitesse lente); 2' (vitesse rapide)
- température de la pâte : 28 °C
- repos en masse : 15'
- poids des pains : 1150 g
- fermentation finale : 120'
- température de fermentation : 25-28 °C
- temps de cuisson : 75'
- température du four : 250 → 220 °C avec vapeur

La préparation de graines ramollies peut être incorporée dans une pâte à pain durant le dernier tiers ou le dernier quart du pétrissage afin d'éviter une dégradation des graines par les forces mécaniques du pétrissage.

La dose d'emploi des graines varie en fonction du type de pain et du goût du consommateur. Il convient de noter que la législation fixe pour certains types de pains la dose minimale de graines à utiliser.

Il convient bien entendu de noter que l'ordre des étapes utilisées dans le procédé pour le mélange des graines à tremper avec l'eau, l'ajout du sel et l'acidification en constitue pas un élément essentiel de l'invention, et que cet ordre pourrait être modifié. C'est ainsi que le sel peut bien entendu être ajouté après l'acidification ou bien même en même temps que l'eau de trempage, par exemple, ou qu'il peut être ajouté lors de l'utilisation en boulangerie du produit conditionné sous vide.

## Revendications

1. Procédé de préparation de produits de boulangerie comprenant des graines entières ou broyées ramollies, **caractérisé en ce que** les graines ramollies sont obtenues par les étapes suivantes :
- mélange des graines à tremper avec de l'eau;
- acidification du mélange de graines et d'eau à un pH inférieur à 4,5;
- cuisson du mélange de graines et d'eau ainsi acidifié.

2. Procédé selon la revendication 1, **caractérisé en ce que** l'on ajoute au mélange des graines de l'eau contenant du sel à raison de 2% environ calculé sur le poids des graines.

3. Procédé selon la revendication 1 ou 2, **caractérisé en ce que** le mélange des graines à tremper avec l'eau s'effectue à raison approximativement d'un volume de graines par volume d'eau.

4. Procédé selon la revendication 1 ou 3, **caractérisé en ce que** l'on ajoute du sel à raison de 2% de sel calculé sur le poids des graines au mélange constitué de graines et d'eau.

5. Procédé selon l'une quelconque des revendications précédentes, **caractérisé en ce que** l'acidification du mélange des graines, d'eau et de sel est réalisé à un pH inférieur à 4,2.

6. Procédé selon l'une quelconque des revendications précédentes, **caractérisé en ce que** l'acidification est réalisée par ajout d'acide lactique, d'acide acétique, d'acide citrique ou d'autres acides, qu'ils soient organiques ou minéraux.

7. Procédé selon l'une quelconque des revendications précédentes, **caractérisé en ce que** l'acidification est réalisée en ajoutant au mélange graines/eau/sel une quantité de levain de panification pour obtenir le pH souhaité.

8. Procédé selon l'une quelconque des revendications précédentes, **caractérisé en ce que** la cuisson est réalisée directement dans un récipient de conditionnement résistant à la température de cuisson.

9. Procédé selon l'une quelconque des revendications 1 à 7, **caractérisé en ce que** la cuisson est réalisée dans une cuve de cuisson avec transfert ultérieur du produit cuit dans des conditionnements en respectant des conditions aseptiques.

10. Procédé selon la revendication 7 ou 9, **caractérisé en ce que** le conditionnement est un conditionnement sous vide.

11. Procédé selon l'une quelconque des revendications précédentes, **caractérisé en ce que** la cuisson consiste en un traitement thermique à une température comprise entre 95 et 120 °C avec un temps de cuisson compris entre 10 et 60 minutes.

12. Procédé selon l'une quelconque des revendications précédentes, **caractérisé en ce que** les graines traitées sont des graines de céréales, de fabacées, de cucurbitacées ou d'oléagineux.

13. Procédé selon l'une quelconque des revendications précédentes, **caractérisé en ce que** le produit de boulangerie est un pain ou une pâte à pain.

14. Procédé selon la revendication 1, **caractérisé en ce que** la cuisson est arrêtée dès que la tendresse des graines est suffisante ; et le procédé comprend une étape de conditionnement du produit humide.

## Patentansprüche

1. Verfahren zur Herstellung von Backwaren, die ganze oder gemahlene erweichte Körner enthalten, **dadurch gekennzeichnet, dass** die erweichten Körner in folgenden Schritten erhalten werden:
- Mischen der einzuweichenden Körner mit Wasser;
- Säuern des Gemischs aus Körnern und Wasser auf einen pH unter 4,5;
- Backen des so gesäuerten Gemischs aus Körnern und Wasser.

2. Verfahren nach Anspruch 1, **dadurch gekennzeichnet, dass** dem Körnergemisch Wasser, das Salz im Verhältnis von ungefähr 2 %, berechnet auf das Gewicht der Körner, hinzugefügt wird.

3. Verfahren nach Anspruch 1 oder 2, **dadurch gekennzeichnet, dass** das Mischen der einzuweichenden Körner mit Wasser im Verhältnis von ungefähr einem Volumen Körner je Volumen Wasser erfolgt.

4. Verfahren nach Anspruch 1 oder 3, **dadurch gekennzeichnet, dass** dem aus Körnern und Wasser bestehendem Gemisch Salz im Verhältnis von 2 %, berechnet auf das Gewicht der Körner, hinzugefügt wird.

5. Verfahren nach irgendeinem der vorhergehenden Ansprüche, **dadurch gekennzeichnet, dass** das Säuern des Gemischs aus Körnern, Wasser und Salz auf einen pH unter 4,2 ausgeführt ist.

6. Verfahren nach irgendeinem der vorhergehenden Ansprüche, **dadurch gekennzeichnet, dass** das Säuern durch Hinzufügen von Milchsäure, Essigsäure, Zitronensäure oder anderen organischen oder mineralischen Säuren ausgeführt ist.

7. Verfahren nach irgendeinem der vorhergehenden Ansprüche, **dadurch gekennzeichnet, dass** das Säuern durch Hinzufügen einer Menge Brotbereitungssauerteig zu dem Gemisch Körner/Wasser/Salz ausgeführt ist, um den gewünschten pH zu erhalten.

8. Verfahren nach irgendeinem der vorhergehenden Ansprüche, **dadurch gekennzeichnet, dass** das Backen direkt in einem Verpackungsbehälter, der die Backtemperatur aushält, ausgeführt ist.

9. Verfahren nach irgendeinem der Ansprüche 1 bis 7, **dadurch gekennzeichnet, dass** das Backen in einem Backgefäß mit späterem Übertragen des gebackenen Produkts in Verpackungen unter Einhaltung aseptischer Bedingungen ausgeführt ist.

10. Verfahren nach Anspruch 7 oder 9, **dadurch gekennzeichnet, dass** die Verpackung eine Vakuumverpackung ist.

11. Verfahren nach irgendeinem der vorhergehenden Ansprüche, **dadurch gekennzeichnet, dass** das Backen aus einer Wärmebehandlung bei einer Temperatur zwischen 95 und 120 °C mit einer Backzeit zwischen 10 und 60 Minuten besteht.

12. Verfahren nach irgendeinem der vorhergehenden Ansprüche, **dadurch gekennzeichnet, dass** es sich bei den behandelten Körnern um Körner von Getreide, Schmetterlingsblütler, Kürbisgewächsen oder Ölpflanzen handelt.

13. Verfahren nach irgendeinem der vorhergehenden Ansprüche, **dadurch gekennzeichnet, dass** es sich bei der Backware um ein Brot oder einen Brotteig handelt.

14. Verfahren nach Anspruch 1, **dadurch gekennzeichnet, dass** das Backen angehalten wird, so bald die Weichheit der Körner ausreichend ist, und das Verfahren einen Verpackungsschritt des feuchten Produkts umfasst.

## Claims

1. A method for preparing bakery products comprising whole or crushed softened seeds, **characterised in that** the softened seeds are obtained by the following steps :
- mixing the seeds to be steeped with water,
- acidifying the mixture of seeds and water to a pH of less than 4.5,
- cooking the so acidified mixture of seeds and water.

2. The method according to claim 1, **characterised in that** water containing salt is added in the mixture of seeds in the proportion of approximately 2% calculated with respect to the weight of the seeds.

3. The method according to claim 1 or 2, **characterised in that** the mixture of the seeds to be steeped with the water is carried out in the proportion of approximately one volume of seeds per volume of water.

4. The method according to claim 1 or 3, **characterised in that** salt is added to the mixture of seeds and water in the proportion of 2% of salt calculated with respect to the weight of the seeds.

5. The method according to any of the preceding claims, **characterised in that** the acidification of the mixture of seeds, water and salt is carried out at a pH of less than 4.2.

6. The method according to any of the preceding claims, **characterised in that** the acidification is carried out by addition of lactic acid, acetic acid, citric acid, or other acids, either organic or inorganic acids.

7. The method according to any of the preceding claims, **characterised in that** the acidification is carried out by adding an amount of leaven to the mixture of seeds, water and salt to obtain the desired pH.

8. The method according to any of the preceding claims, **characterised in that** the cooking is carried out directly in a packaging container which is resistant to the cooking temperature.

9. The method according to any of claims 1 to 7, **characterised in that** the cooking is carried out in a cooking vessel with subsequent transfer of the cooked product into packaging while observing aseptic conditions.

10. The method according to claim 7 or 9, **characterised in that** the packaging is a vacuum packaging.

11. The method according to any of the preceding claims, **characterised in that** the cooking consists of a heat treatment at a temperature of between 95 and 120 °C with a cooking time of between 10 and 60 minutes.

12. The method according to any of the preceding claims **characterised in that** the treated seeds are cereal, fabaceous, cucurbitaceous or oleaginous seeds.

13. The method according to any of the preceding claims, **characterised in that** the bakery product is a loaf of bread or bread dough.

14. The method according to claim 1, **characterised in that** the cooking is halted as soon as the softness of the seeds is satisfactory and the method comprises a packaging step of the moist product.
